(19) Europäisches Patentamt
European Patent Office
Office européen des brevets

(11) **EP 2 163 850 B1**

(12) **FASCICULE DE BREVET EUROPEEN**

(45) Date de publication et mention
de la délivrance du brevet:
**23.03.2016 Bulletin 2016/12**

(51) Int Cl.:
***G01D 5/12*** *(2006.01)*

(21) Numéro de dépôt: **09290611.4**

(22) Date de dépôt: **04.08.2009**

(54) **Dispositif de codage magnétique**

Magnetische Kodiervorrichtung

Magnetic encoding device

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.08.2008 FR 0804746**

(43) Date de publication de la demande:
**17.03.2010 Bulletin 2010/11**

(73) Titulaire: **SNR Roulements
74000 Annecy (FR)**

(72) Inventeurs:
• **Desbiolles, Pascal
74570 Thorens Glières (FR)**
• **Vandamme, Etienne
74650 Chavanod (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A- 1 037 015     EP-A- 1 876 422
DE-A1- 19 609 793     DE-A1- 19 849 613
FR-A1- 2 771 864     US-A1- 2008 191 691**

EP 2 163 850 B1

**Description**

**DOMAINE TECHNIQUE DE L'INVENTION**

L'invention concerne un dispositif de codage magnétique, un système de mesure du mouvement d'une pièce mobile en rotation utilisant un tel dispositif de codage et un procédé de mesure du mouvement axial d'une pièce mobile en rotation.

L'invention concerne plus particulièrement la mesure du déplacement axial d'une pièce mobile en rotation autour d'un axe, et en translation selon un axe parallèle à l'axe de rotation.

**ÉTAT DE LA TECHNIQUE**

Pour fonctionner correctement, une liaison pivot nécessite un jeu axial de fonctionnement. Toutefois, le jeu varie généralement en fonction de l'état des pièces de guidage et des paliers. Il est donc capital de mesurer le jeu axial qui est un bon indicateur de l'état d'usure du palier. Dans les boîtes d'essieu ferroviaire par exemple, les roulements sont victimes de fretting corrosion qui, au fur et à mesure de l'usure des bagues, induit un jeu axial qui peut dépasser le mm.

Dans l'art antérieur, il est connu des systèmes magnétiques de mesure du mouvement d'un organe tournant utilisant un codeur et un détecteur. Le codeur est généralement un anneau, solidaire de l'organe tournant, comportant une piste annulaire magnétique sur laquelle une pluralité de paires de pôles Nord et Sud, equirépartis, sont magnétisées. Le capteur fixe est disposé radialement, en regard de la piste magnétique et composé d'éléments sensibles au champ magnétique.

Le capteur délivre des signaux magnétiques dont la fréquence permet notamment de déterminer la vitesse de rotation de l'organe tournant. Toutefois, ces systèmes ne permettent pas de mesurer le déplacement axial de la pièce mobile en rotation.

Il est également connu de disposer le capteur face à l'anneau et de mesurer la variation d'intensité magnétique afin de déterminer le déplacement axial de l'organe tournant. Toutefois, ces mesures ne sont pas fiables car la mesure de l'intensité d'un champ magnétique présente une dérive en température importante. Par conséquent, ce système n'est pas applicable dans un environnement sévère présentant des fortes variations de température.

Pour déterminer le déplacement axial d'un arbre dans un alésage, il existe également des solutions " bout d'arbre ", où un capteur de position ou de proximité est monté en face de l'extrémité de l'arbre. Toutefois, outre le fait que cette disposition n'est pas toujours possible pour des raisons d'encombrement, le bout d'arbre a parfois d'autres fonctions telles que retour de courant ou pignon conique, qui excluent cette solution.

Par ailleurs, la demande de brevet EP 1 875 422 divulgue un système de détection d'un déplacement axial. Ce système utilise un anneau magnétique multipolaire solidaire de l'organe tournant et un capteur fixe disposé radialement, en regard et à distance de lecture, de la circonférence de l'anneau. Sur sa périphérie, l'anneau présente une transition magnétique singulière qui est inclinée par rapport à l'axe de rotation de la pièce tournante. Lorsque l'organe tournant s'est déplacé axialement, le système détecte une modification de la longueur des pôles, de part et d'autre de la singularité. Il est donc possible d'en déduire un déplacement axial de la pièce tournante. Toutefois, la mesure du déplacement axial n'est effectuée qu'une seule fois par tour, et la mesure de vitesse est faussée sur ce pôle. Cette solution est donc incompatible avec une mesure de vitesse haute résolution.

La demande de brevet japonais JP 2006201157 décrit un système permettant de mesurer le déplacement axial d'une pièce mobile en rotation. Le système de mesure comprend un codeur annulaire solidarisé à la bague intérieure d'un roulement à billes et un ou deux capteurs fixés à la bague extérieure du roulement et situés, radialement, en regard de la piste de codage annulaire du codeur.

Le brevet FR 2 771 864 décrit un système permettant de mesurer la position absolue sans nécessiter de mise à niveau et comprenant un anneau magnétique multipolaire cylindrique comprenant des pôles nord et sud formant une hélice.

Dans un mode de réalisation, illustré sur la figure 10 de la demande JP 2006201157, le codeur comprend deux pistes de codages. Les deux pistes présentent des motifs en forme d'hélice d'angle constant et de sens trigonométrique opposé. Un capteur est disposé en regard de chacune des deux pistes et une unité de calcul détermine le déplacement axial en fonction de la différence de phase entre les signaux provenant des capteurs.

Le codeur comprend donc deux pistes de codage distinctes, lues chacune par un capteur. Par conséquent, pour détecter des déplacements axiaux importants, les pistes de codages doivent être suffisamment larges. Ainsi, le dispositif de codage présente un encombrement important.

**OBJET DE L'INVENTION**

L'invention vise à remédier à ces problèmes en proposant un dispositif de codage peu encombrant permettant de mesurer, en continu, le déplacement axial de ladite pièce et sa vitesse de rotation, d'une manière fiable et précise.

À cet effet, et selon un premier aspect, l'invention propose un dispositif de codage magnétique pour la mesure du mouvement d'une pièce mobile en rotation selon un axe A, comprenant un anneau magnétique d'axe B, destiné à être solidarisé à ladite pièce mobile concentriquement audit axe A, ledit anneau comprenant une piste périphérique sur laquelle sont magnétisées une pluralité de paires de pôles Nord et Sud, équirépartis. Le dispositif est remarquable en que les pôles de ladite piste périphérique présentent une forme d'hélice d'axe B et d'angle d'hélice $\alpha$ variable suivant une fonction $\alpha = f(x)$ où x désigne la coordonnée axiale du point considéré sur l'axe B.

Le dispositif de codage selon l'invention ne nécessite donc qu'un seul anneau et les capteurs scrutant la piste périphérique peuvent ainsi être regroupés.

En outre, l'angle d'hélice étant variable suivant une fonction déterminée, le dispositif de codage peut ne comprendre qu'une seule piste parcourue par les deux capteurs, afin de déterminer le déplacement axial de la pièce. L'anneau magnétique présente donc un encombrement réduit. L'intégration d'un dispositif de codage magnétique selon l'invention est ainsi facilitée.

Par conséquent, le dispositif de codage selon l'invention est particulièrement avantageux pour des applications où l'encombrement doit être limité.

En outre, le dispositif de codage utilisant deux capteurs, il est possible d'obtenir deux mesures de vitesses dupliquées. Ainsi, la redondance de la mesure permet de garantir une sécurité accrue dans la mesure de vitesse, ce qui est notamment particulièrement intéressant lorsque la mesure de vitesse est utilisée dans des procédés ABS ou anti-patinage.

Avantageusement, l'angle d'hélice $\alpha$ variable suivant une fonction $\alpha = f(x) = \arctan(2Kx)$, où K désigne une constante de proportionnalité non nulle.

Ainsi, le déplacement axial de la pièce mobile en rotation est une fonction linéaire du déphasage. Par conséquent, un tel dispositif de codage permet de déterminer simplement le déplacement axial.

Selon un second aspect, l'invention concerne un système de mesure du mouvement axial d'une pièce mobile en rotation selon un axe A, comportant:

- un dispositif de codage selon le premier aspect de l'invention;
- un dispositif de détection de champ magnétique comprenant au moins un premier et un second capteurs magnétiques fixes, disposés à une distance axiale d non nulle l'un de l'autre, radialement en regard et à distance de lecture de la piste périphérique du dispositif de codage et sensibles aux variations du champ magnétique induit par le dispositif de codage; et
- une unité de traitement du signal agencée pour déterminer le déphasage entre un premier signal issu du premier capteur et un deuxième signal issu du deuxième capteur afin de déterminer le déplacement axial de ladite pièce mobile en rotation.

Avantageusement, le premier capteur comporte:

- une pluralité d'éléments sensibles situés dans un même plan perpendiculaire à l'axe A, les éléments sensibles étant divisés en au moins deux sous-ensembles, et
- un circuit électronique agencé pour délivrer deux signaux analogiques SIN1 et COS1 de même amplitude en quadrature en fonction des signaux issus de ces sous-ensembles.

Dans un premier mode de réalisation de l'invention, le premier signal issu du premier capteur est un signal analogique pseudo-sinusoïdal, le deuxième signal issu du deuxième capteur est un signal analogique pseudo-sinusoïdal et l'unité de traitement détermine le déphasage temporel entre le premier signal et le deuxième signal. Ainsi, le déplacement axial peut être déterminé de manière simple et peu coûteuse.

Dans un second mode de réalisation de l'invention, l'unité de traitement du signal comporte:

- un calculateur pour déterminer un signal ARCTAN1 (SIN1/COS1) à partir des signaux SIN1 et COS1 ; et
- un opérateur pour déterminer le déphasage entre le signal SIN et le deuxième signal en fonction de la valeur du signal ARCTAN1 (SIN1/COS1) correspondant à un passage d'un seuil déterminé par le signal issu du deuxième capteur.

Ainsi, le système de mesure détermine le déplacement axial de manière indépendante des variations de la vitesse de rotation de la pièce mobile.

Dans un troisième mode de réalisation de l'invention, le système de mesure comporte:

- un multiplicateur de résolution spatiale pour générer, à partir des deux signaux analogiques SIN1 et COS1 en quadrature au moins un signal numérique changeant d'état N fois par période magnétique, N étant un nombre entier supérieur ou égal à 4 ; et

- un compteur pour déterminer le déphasage entre le signal SIN1 et le deuxième signal en comptant le nombre de changements d'état du signal numérique entre un passage à zéro du signal SIN1 et le passage à zéro du signal de référence.

Ainsi, le premier capteur délivre un signal permettant d'obtenir une mesure précise du déplacement axial.

Par conséquent, comme le nombre de changements d'état du signal numérique est représentatif de la position absolue du capteur sur la paire de pôles considérée, le système de mesure permet également de déterminer une valeur de déplacement axial qui n'est pas altérée par des variations de la vitesse de rotation de la pièce mobile.

Avantageusement, le multiplicateur de résolution spatiale est agencé pour générer, à partir des deux signaux analogiques SIN1 et COS1 en quadrature deux signaux numériques en quadrature, changeant d'état N fois par période magnétique. Ainsi, la présence des deux signaux numériques en quadrature permet d'obtenir le sens de rotation de l'arbre.

Avantageusement, le système comporte en outre une mémoire pour mémoriser les valeurs extrêmes du déphasage et un analyseur pour en déduire le jeu axial entre le dispositif de codage et le dispositif de détection.

Avantageusement, le premier capteur et le deuxième capteur sont dans un circuit intégré personnalisé ASIC commun. Par conséquent, l'encombrement d'un tel dispositif de détection est limité et son intégration est donc facilitée. En outre, l'intégration des deux capteurs sur un même circuit intégré permet de diminuer sensiblement les coûts de fabrication du système de mesure.

Enfin, selon un troisième aspect, l'invention concerne un procédé de mesure du mouvement axial d'une pièce mobile en rotation autour d'un axe A par rapport à un référentiel fixe par un dispositif de codage selon l'invention, comportant au moins les étapes suivantes:

- engendrer un champ magnétique fixe par rapport à la pièce mobile à l'aide d'au moins une piste magnétique annulaire, l'une des composantes radiales du champ magnétique étant, à une distance radiale prédéterminée de l'axe A, dans un référentiel lié à la pièce mobile, une fonction F ($\Theta$, X) de la position angulaire $\Theta$ considérée sur la piste et de la position axiale X considérée sur la piste, telle que:

$$F(\Theta, X) = K.\Psi\big(P\big[\Theta + G(X)\big]\big)$$

où P est un entier, G une fonction strictement croissante donnée de X, et $\Psi$ une fonction périodique de période $2\pi$,
- délivrer un premier signal S fonction des variations du champ magnétique engendré par la piste magnétique vues par un premier capteur fixe par rapport au référentiel fixe et distant, et
- délivrer un signal référence REF fonction des variations du champ magnétique engendré par la piste magnétique vues par un deuxième capteur fixe par rapport au référentiel fixe et distant du premier capteur d'une distance axiale d, et
- déterminer un déphasage instantané entre les variations du champ magnétique vu par le premier capteur et les variations du champ magnétique vu par le deuxième capteur en fonction du signal S et du signal REF ; et
- déterminer le déplacement axial de la piste magnétique par rapport au capteur en fonction du déphasage instantané.

Le procédé selon l'invention permet donc de déterminer de manière fiable le déplacement axial de la pièce mobile en utilisant un système de mesure présentant un encombrement restreint.

Dans le second mode de réalisation, le procédé comporte les étapes suivantes:

- délivrer deux signaux analogiques SIN1 et COS1 de même amplitude en quadrature en fonction des signaux représentatifs des variations du champ magnétique vues par un premier capteur fixe par rapport au référentiel et disposé en regard d'une piste annulaire,
- déterminer le signal S=ARCTAN1 (SIN1 /COS1) à partir des signaux SIN1 et COS1.

Dans une variante du second mode de réalisation, le procédé comporte les étapes suivantes:

- délivrer deux signaux analogiques SIN2 et COS2 de même amplitude en quadrature en fonction des signaux représentatifs des variations du champ magnétique vu par le deuxième capteur,
- déterminer le signal REF en fonction de SIN2 et/ou de COS2.

Dans une variante avantageuse, le procédé comporte les étapes suivantes:

- déterminer le signal REF=ARCTAN$_2$ (SIN2/COS2),
- déterminer le déphasage instantané comme étant la différence entre le signal REF et le signal ARCTAN1 (SIN1/COS1).

Ainsi, selon cette variante, le procédé permet de connaître un temps réel déplacement axial de l'arbre.

Avantageusement, le procédé comporte l'étape suivante: déterminer le déphasage en fonction de la valeur prise par le signal ARCTAN1(SIN1/COS1) lorsque le signal REF passe par une valeur seuil prédéterminée dans au moins un sens prédéterminé.

Avantageusement, le signal REF est proportionnel au signal SIN2 ou au signal COS2.

Dans un mode de réalisation préféré, la fonction G est une fonction de constante R, telle que:

$$G(x) = R\left(\frac{x - x_0}{x_0}\right)^2$$

Ainsi, la valeur du déphasage $\Phi$ est une fonction linéaire du déplacement axial.

## DESCRIPTION DES FIGURES

D'autres objets et avantages de l'invention apparaîtront au cours de la description qui suit, faite en référence aux dessins annexés, dans lesquels:

- la figure 1 a est une vue schématique d'un système de mesure du mouvement axial selon un premier mode de réalisation ;

- la figure 1b est une courbe illustrant la courbe de déphasage SIN/REF en fonction du déplacement axial de la pièce;

- la figure 1c est une courbe illustrant la forme d'une transition magnétique d'un pôle d'un anneau, lorsque les pôles présentent une forme d'hélice dont l'angle d'hélice $\alpha$ est variable suivant une fonction $\alpha$ = f(x)= arc tan 2K x ;

- la figure 2 illustre schématiquement un système de mesure selon un premier mode de réalisation de l'invention, dans lequel le premier et le second capteur délivre respectivement les signaux SIN et REF représentés ;

- la figure 3 illustre schématiquement un système de mesure selon un second mode de réalisation de l'invention, dans lequel le premier capteur délivre deux signaux SIN1 et COS1 en quadrature, traités par un calculateur afin de déterminer le signal ARCTAN1 (SIN1/COS1) et le second capteur délivre le signal REF illustré;

- la figure 4 illustre schématiquement un système de mesure selon un troisième mode de réalisation de l'invention, dans lequel le premier capteur délivre deux signaux SIN1 et COS1 en quadrature, traités par un multiplicateur de résolution pour générer un signal numérique et le second capteur délivre le signal REF illustré; et

- la figure 5 illustre deux signaux numériques en quadrature (Voie A et voie B) générés par un multiplicateur de résolution spatiale, à partir des deux signaux analogiques SIN1 et COS1 en quadrature, et changeant d'état N fois par période magnétique, et un signal numérique obtenue en exploitant toutes les transitions desdits deux signaux numériques en quadrature.

## EXEMPLE DE RÉALISATION

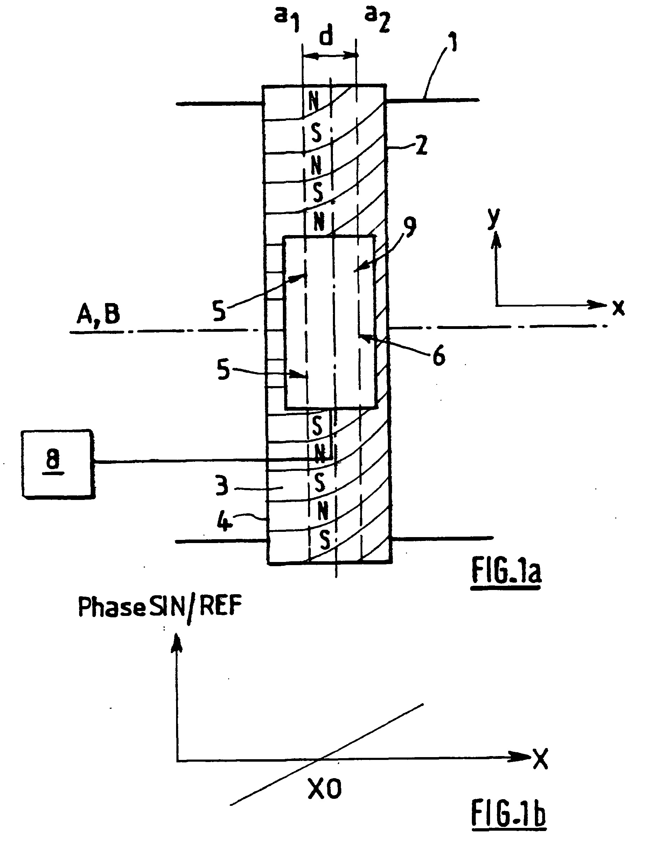

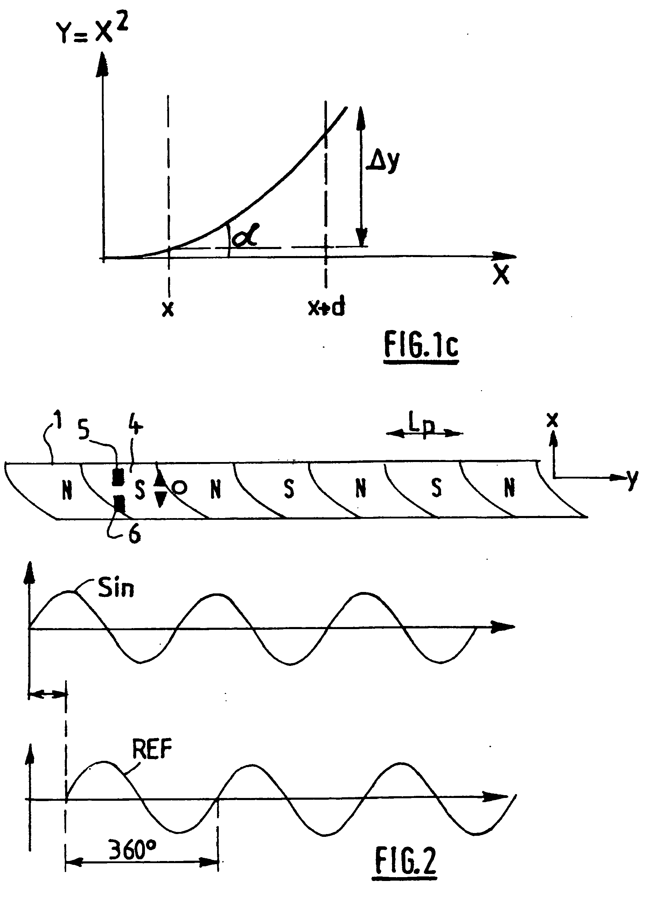

Le système et le procédé selon l'invention visent à mesurer le mouvement axial d'une pièce mobile en rotation autour d'un axe A et en translation parallèlement à l'axe A, telle que l'arbre 1 qui est représenté sur la figure 1 a.

Dans la description qui suit, le déplacement de l'arbre le long de son axe de rotation A est désigné par le terme de « déplacement axial ». x désigne la coordonnée axiale d'un point considéré sur l'axe B, axe de l'anneau « codeur », et y désigne la coordonnée curviligne d'un point de la piste périphérique de l'anneau, mesurée dans un plan perpendiculaire à l'axe B.

En outre, on entend par « longueur polaire Lp », la longueur d'un pôle magnétique mesuré selon l'axe y.

Par ailleurs, on entend par angle d'hélice, au sens de la présente description, l'angle qui est formé par la tangente à l'hélice du pôle par rapport à l'axe x.

Par sonde à effet Hall, on désigne ici des capteurs comprenant au moins un élément sensible, généralement un semi-conducteur sous forme de plaquette, tel que, lorsqu'il est parcouru par un courant I, en étant par ailleurs soumis à une induction B faisant avec le courant un angle $\Theta$, il apparaît dans une direction perpendiculaire au courant I et à l'induction B une tension V valant V= K.I.B. sin $\Theta$, K étant appelé « constante de Hall », et étant caractéristique du matériau et de la géométrie de l'élément sensible, K variant avec la température.

Par « magnéto-résistance », on désigne ici une varistance sensible à l'intensité d'un champ magnétique, en d'autres termes une résistance en matériau semi-conducteur dont la valeur ohmique varie lorsque varie l'intensité d'un champ magnétique unidirectionnel appliqué perpendiculairement à la direction du courant qui parcourt la résistance.

Le système de mesure du déplacement comprend un générateur d'impulsions magnétiques appelé dispositif de codage, un dispositif de détection de champ magnétique et une unité de traitement du signal 8 permettant de traiter les signaux provenant du dispositif de détection afin d'obtenir l'information désirée, et notamment le déplacement axial de l'arbre 1.

Le dispositif de codage selon l'invention est représenté sur la figure 1 a. Le dispositif de codage comprend un anneau magnétique 2 multipolaire d'axe B, appelé également « codeur ». L'anneau 2 est solidarisé à l'arbre 1, concentriquement à l'axe de rotation A de l'arbre. L'anneau magnétique 2 comprend un nombre pair de pôles, Nord et Sud, disposés sur la circonférence de l'anneau 2 et formant une piste périphérique. Les pôles 3, 4 sont équirépartis sur la périphérie de l'anneau 2 et présentent des longueurs polaires Lp constantes.

L'anneau 2 est, par exemple, une pièce en matériau synthétique chargé de particules de ferrite de Baryum, ou de ferrite de Strontium, ou d'un autre matériau ferromagnétique dur. Le matériau comprend une pluralité de domaines contigus, à direction d'aimantation inversée, d'un domaine donné par rapport aux deux domaines contigus, formant les pôles 3, 4 de l'anneau.

Selon l'invention, les pôles 3, 4 de la piste périphérique présentent une forme d'hélice d'axe B dont l'angle d'hélice $\alpha$ est variable suivant une fonction $\alpha = f(x)$ où x désigne la coordonnée axiale du point considéré sur l'axe B.

En d'autres termes, dans un référentiel lié à l'arbre, l'une des composantes radiales du champ magnétique engendré par l'anneau 2 est, à une distance radiale prédéterminée de l'axe A, une fonction $F(\Theta, X)$ de la position angulaire $\Theta$ considérée sur la piste et de la position axiale X considérée sur la piste, telle que:

$$F(\Theta, X) = K.\Psi\{P[\Theta + G(X)]\}$$

où P est un entier et G une fonction strictement croissante donnée de X et $\Psi$ une fonction périodique continue de période $2\pi$, pouvant donc se développer en série de fonctions sinusoïdales:

$$\Psi(\theta) = \sum_{n=0}^{\infty} A_n \sin(n\theta) + B_n \cos(n\theta)$$

où $n$ est un indice entier et $A_n$ et $B_n$ sont des constantes.

Le dispositif de détection de champ magnétique est composé de deux capteurs 5, 6 magnétiques fixes. Les capteurs 5, 6 sont, par exemple, choisis parmi les groupes comprenant les sondes à effet Hall magnétorésistances, les magnétorésistances tunnels ou les magnétorésistances géantes. Les capteurs 5, 6 sont disposés radialement en regard de la piste périphérique de l'anneau 2. Les axes de lecture de capteurs 5,6, désignés a1 et a2, sont distants d'une longueur d constante et orientés radialement à l'axe A de rotation de l'arbre 1.

Le dispositif de détection peut être utilisé de façon intégrée sur un substrat en silicium ou équivalent par exemple AsGa, de sorte à former un circuit intégré personnalisé pour application spécifique, circuits parfois désignés sous le terme ASIC (Application Spécifie integrated Circuit), pour faire référence aux circuits intégrés conçus partiellement ou complètement en fonction des besoins.

Ainsi, dans le mode de réalisation représenté sur la figure 1, le premier 5 et le second capteur 6 sont intégrés sur l'ASIC 9.

Les capteurs 5, 6 sont placés à distance de lecture de la piste périphérique de telle sorte qu'ils soient aptes à délivrer des signaux représentatifs de l'induction magnétique délivrée par l'anneau 2 à l'entrefer considéré. Par conséquent, lorsque l'arbre 1 est en rotation, les capteurs 5, 6 délivrent des signaux sinusoïdaux, analogiques, proportionnelles à l'intensité magnétique délivrée par l'anneau multipolaire 6 à l'entrefer considéré. Bien entendu, la période temporelle des signaux sinusoïdaux est proportionnelle à la longueur polaire Lp des pôles 3, 4 et à la vitesse de rotation de l'arbre 1.

Lorsque l'arbre 1 est déplacé axialement, l'anneau magnétique 2 se déplace par rapport aux axes de lectures $a_1$ et $a_2$ et le déphasage $\Phi$ entre les signaux issus du premier 5 et du second capteur 6 est modifié. En effet, comme les pôles 3, 4 de l'anneau 2 présentent une forme hélicoïdale dont l'angle d'hélice $\alpha$ est variable, le déphasage entre les signaux issus du premier 5 et du second capteur 6 est modifié en fonction de l'amplitude du déplacement axial.

Par conséquent, l'unité de traitement du signal 8 est en mesure de déterminer le déplacement axial de la pièce 1, en fonction du déphasage entre les signaux provenant des deux capteurs 5, 6 et de la fonction $\alpha$ = f(x).

Dans le mode de réalisation représenté, les pôles 3, 4 de l'anneau présentent une forme hélicoïdale suivant une fonction y = K $x^2$ (voir figure 1 c). En d'autres termes, l'angle d'hélice est variable suivant une fonction $\alpha$ = f(x)= arc tan 2K x où K désigne une constante de proportionnalité non nulle.

Dans ce cas, la fonction G, paramètre de la fonction F ($\Theta$, X) de génération de champs magnétique, mentionnée ci-dessus est telle que:

$$G(x) = R\left(\frac{x - x_0}{x_0}\right)^2$$

où R et $x_0$ sont des constantes.

Le déphasage $\Phi$ est une fonction linéaire de $\Delta$y qui représente la différence de coordonnées curvilignes de deux points d'une transition magnétique, situés respectivement dans le plan de lecture du premier et du second capteur.

En outre, lorsque les pôles 3, 4 de l'anneau présentent une forme hélicoïdale suivant une fonction y = $x^2$, alors $\Delta$y est égale à ($X^2$-$(X+d)^2$) =-2Xd-$d^2$-2Xd, qui est une fonction linéaire du déplacement axial X (voir figure 1 c). Par conséquent, la valeur du déphasage $\Phi$ est une fonction linéaire du déplacement axial. Ainsi, la mesure du déphasage permet de déduire le déplacement axial de l'arbre 1 par un simple rapport de proportionnalité.

Dans un mode de réalisation préféré de l'invention, le système est équipé d'une mémoire pour mémoriser les valeurs extrêmes du déphasage et un analyseur pour en déduire le jeu axial entre le dispositif de codage et le dispositif de détection.

Plusieurs systèmes et procédés de mesure, décrits par la suite, peuvent être utilisés pour déterminer le déphasage entre les signaux provenant du premier capteur et les signaux provenant du second capteur.

Dans un premier mode de réalisation, illustré sur la figure 2, les deux capteurs 5, 6 délivrent respectivement un signal temporel analogique pseudo-sinusoïdal SIN et un signal temporel analogique pseudo-sinusoïdal REF. Dans ce cas, l'unité de traitement du signal 8 détermine le déphasage temporel entre les deux signaux SIN et REF, en mesurant, par exemple, l'intervalle de temps séparant les passages à zéro des signaux SIN et REF.

Le système de mesure utilisé est ainsi relativement simple et peu coûteux. Toutefois, la précision de la mesure ainsi obtenue n'est pas pleinement satisfaisante car la valeur du déphasage mesuré dépend de la stabilité de la vitesse de rotation de la pièce mobile entre la détection des deux passages à zéro.

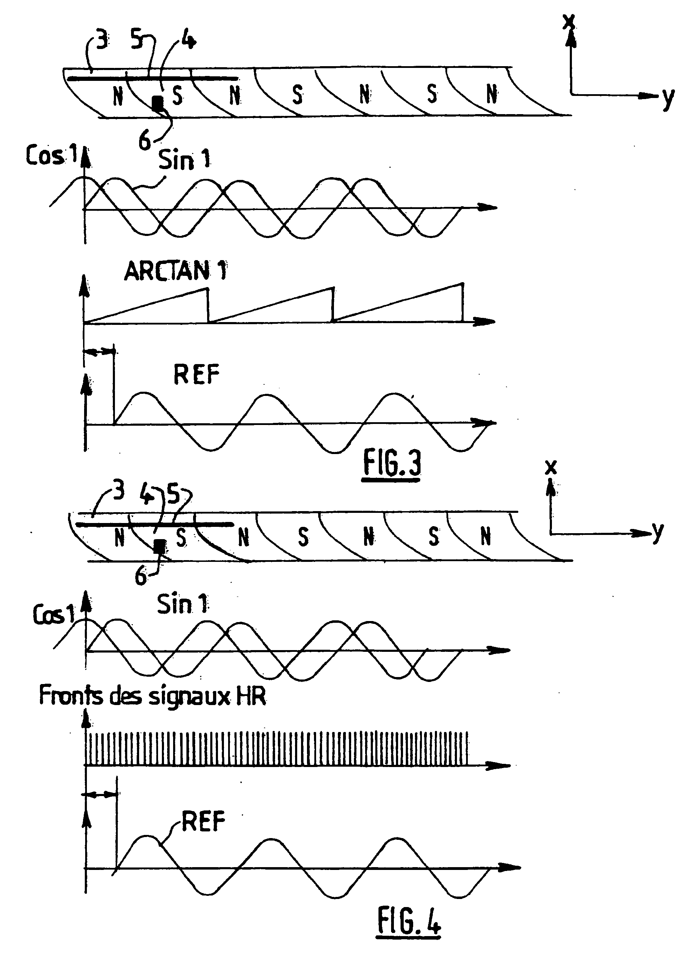

Dans un second mode de réalisation, illustré sur la figure 3, le premier capteur 5 est un capteur comportant une pluralité d'éléments alignés, situés dans un même plan perpendiculaire à l'axe A, sensibles aux champs magnétiques, divisés en au moins deux sous-ensembles et un circuit électronique agencé pour délivrer deux signaux analogiques SIN1 et COS1, de même amplitude, en quadrature sensiblement parfaite, en fonction des signaux issus de ces sous-ensembles.

De tels capteurs sont par exemple décrits dans la demande FR 2 790 827 issues de la demanderesse.

Le second capteur 6 délivre un signal temporel analogique pseudo sinusoïdal REF.

L'unité de traitement 8 du signal comporte un calculateur permettant de déterminer un signal ARCTAN1=arctan(SIN1/COS1), illustré sur la figure 3, à partir des signaux SIN1 et COS1. En outre, afin de déterminer le déphasage entre le signal SIN1 et le deuxième signal REF, l'unité de traitement 8 comporte un opérateur. L'opérateur détermine le déphasage entre les signaux issus des capteurs en fonction de la valeur du signal ARCTAN1 correspondant au passage d'un seuil déterminé par le signal REF issu du deuxième capteur. Par exemple, la valeur du déphasage est déterminée en mesurant la valeur du signal ARCTAN1 lors du passage à zéro de la fonction REF.

Cette méthode est nettement plus précise que la méthode décrite précédemment. En effet, elle permet d'obtenir une mesure indépendante des variations de vitesse car la valeur prise par le signal ARCTAN1 est représentative de la position absolue du capteur sur la paire de pôle considéré.

Dans une variante du second mode de réalisation, non représentée, le premier 5 et le second 6 capteurs sont des capteurs comportant une pluralité d'éléments alignés, situés dans un même plan perpendiculaire à l'axe A, sensibles aux champs magnétiques et un circuit électronique agencé pour délivrer chacun deux signaux analogiques SIN1, COS1 ; et SIN2, COS2, de même amplitude, en quadrature sensiblement parfaite. Dans ce cas, le calculateur est apte à déterminer un signal ARCTAN1 = arctan(SIN1/COS1) à partir des signaux SIN1 et COS1 et un signal ARCTAN2= arctan(SIN2/COS2) à partir des signaux SIN2 et OS2. L'opérateur détermine alors la différence entre les valeurs instantanées prises par les signaux ARCTAN1 et ARCTAN2 afin de déterminer le déphasage.

Ainsi, le système et le procédé de mesure, selon cette variante de réalisation, permettent, en outre, de connaître en temps réel le déplacement axial de l'arbre, sous réserve d'une initialisation du système de mesure après son montage sur l'arbre 1.

Dans un troisième mode de réalisation de l'invention, illustré sur la figure 4, le premier capteur est également un capteur comportant une pluralité d'éléments alignés sensibles aux champs magnétiques, divisés en au moins deux sous-ensembles et un circuit électronique agencé pour délivrer deux signaux analogiques SIN1 et COS1, en quadrature sensiblement parfaite, en fonction des signaux issus de ces sous-ensembles.

Le système de mesure comporte, dans ce cas, un multiplicateur de résolution spatiale qui génère à partir des deux signaux analogiques SIN1 et COS1 en quadrature au moins un signal numérique changeant d'état N fois par période magnétique, N étant un nombre entier supérieur ou égal à 4. Un tel circuit multiplicateur de résolution est par exemple décrit dans le document EP 0 929 795 au nom de la demanderesse. Le multiplicateur de résolution spatiale pourra indifféremment être intégré à l'unité 8 de traitement du signal 8 ou au capteur 5.

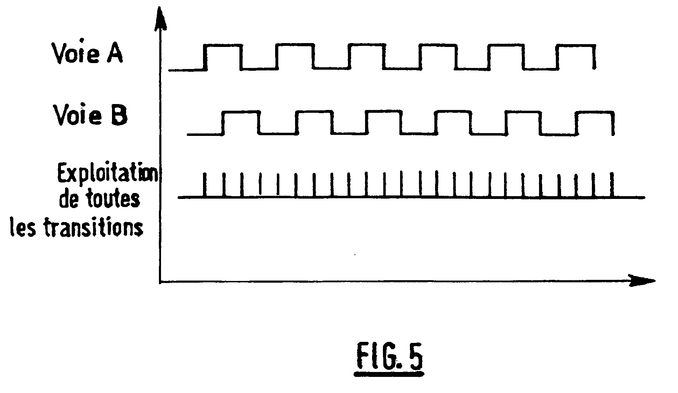

Dans un mode de réalisation préféré, le multiplicateur de résolution spatiale génère, à partir des deux signaux analogiques SIN1 et COS1, deux signaux numériques en quadrature, représentés sur la figure 5. Ainsi, le système de mesure est apte à déterminer le sens de rotation de l'arbre. En outre, en exploitant les fronts des deux signaux numériques en quadrature mentionnés ci-dessus, il est possible d'obtenir le signal numérique, représenté sur la figure 4 et sur la partie basse de la figure 5, présentant une sensibilité deux fois plus importante que chacun desdits signaux numériques en quadrature.

Afin de déterminer le déphasage, l'unité de traitement du signal 8 comporte un compteur apte à compter le nombre de changements d'état du signal numérique entre un passage à zéro du signal SIN1 et le passage à zéro du signal de référence REF. Dans le mode de réalisation préféré, illustré sur la figure 4, le déphasage est mesuré en comptant le nombre de fronts du signal numérique haute résolution correspondant aux fronts des deux signaux numériques en quadrature.

Par exemple, en supposant des signaux haute résolution donnant 128 fronts équirépartis sur une période magnétique, la distance entre deux fronts est de 360/128 = 2.81 degrés magnétiques. Ainsi, dans le cas où le signal SIN1 et le signal REF sont déphasés de 17 fronts Haute résolution, le déphasage sera alors de 17*2.81 =47.8° magnétique.

Cette méthode présente également l'avantage d'être très précise, en permettant une mesure du déphasage indépendante des variations de vitesse.

Enfin, dans une variante du troisième mode de réalisation, non représenté, le second capteur est également un capteur comportant une pluralité d'éléments alignés, situés dans un même plan perpendiculaire à l'axe A, sensibles aux champs magnétiques et un circuit électronique délivrant deux signaux analogiques SIN2 et COS2. En outre, le système de mesure comporte un second multiplicateur de résolution générant à partir des deux signaux analogiques SIN2 et COS2 en quadrature au moins un signal numérique changeant d'état N fois par période magnétique, N étant un nombre entier supérieur ou égal à 4.

Afin de mesurer le déphasage et en déduire l'amplitude du déplacement axial, l'unité de traitement du signal 8 comporte un compteur numérique qui est incrémenté par les fronts haute résolution issus du premier capteur et qui se décrémente par les fronts haute résolution issus du second capteur.

Lorsque l'arbre est dans une position initiale par rapport aux capteurs, le compteur reste proche d'une valeur nulle car il y a autant de fronts qui incrémentent que de fronts qui décrémentent. Toutefois, lorsque l'arbre 1 se déplace, la variation de la phase des signaux va conduire à une augmentation ou une diminution de la valeur affichée par le compteur.

Ainsi, cette méthode permet de connaître précisément l'amplitude du déplacement axial en mesurant l'amplitude de variation du compteur. En outre, cette méthode est également indépendante des variations de vitesse de rotation de la pièce mobile.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1.  Dispositif de codage magnétique pour la mesure du mouvement d'une pièce (1) mobile en rotation selon un axe A, comprenant un anneau (2) magnétique d'axe B, destiné à être solidarisé à ladite pièce mobile (1) concentriquement audit axe A, ledit anneau (2) comprenant une piste périphérique sur laquelle sont magnétisées une pluralité de paires de pôles Nord et Sud (3, 4), équirépartis, le dispositif étant **caractérisé en ce que** les pôles de ladite piste périphérique présentent une forme d'hélice d'axe B et d'angle d'hélice $\alpha$ variable suivant une fonction $\alpha = f(x)$ où x désigne la coordonnée axiale du point considéré sur l'axe B.

2.  Dispositif de codage magnétique selon la revendication 1, **caractérisé en ce que** l'angle d'hélice $\alpha$ est variable suivant une fonction $a = f(x) = \arctan(2Kx)$ où K désigne une constante de proportionnalité non nulle.

3. Système de mesure du mouvement axial d'une pièce mobile (1) en rotation selon un axe A, comportant :

- un dispositif de codage selon l'une des revendications 1 ou 2;
- un dispositif de détection de champ magnétique comprenant au moins un premier (5) et un second capteurs (6) magnétiques fixes, disposés à une distance axiale d non nulle l'un de l'autre, radialement en regard et à distance de lecture de la piste périphérique du dispositif de codage et sensibles aux variations du champ magnétique induit par le dispositif de codage; et
- une unité de traitement du signal (8) agencée pour déterminer le déphasage entre un premier signal issu du premier capteur et un deuxième signal issu du deuxième capteur afin de déterminer le déplacement axial de ladite pièce mobile (1) en rotation.

4. Système de mesure du mouvement selon la revendication 3, **caractérisé en ce que** le premier capteur (5) comporte

- une pluralité d'éléments sensibles situés dans un même plan perpendiculaire à l'axe A, les éléments sensibles étant divisés en au moins deux sous-ensembles et
- un circuit électronique agencé pour délivrer deux signaux analogiques SIN1 et COS1 de même amplitude en quadrature en fonction des signaux issus de ces sous-ensembles.

5. Système de mesure selon la revendication 4, **caractérisé en ce qu'**il comporte:

- un multiplicateur de résolution spatiale pour generer, à partir des deux signaux analogiques SIN1 et COS1 en quadrature au moins un signal numérique changeant d'état N fois par période magnétique, N étant un nombre entier supérieur ou égal à 4 ; et
- un compteur pour déterminer le déphasage entre le signal SIN1 et le deuxième signal en comptant le nombre de changements d'état du signal numérique entre un passage à zéro du signal SIN1 et le passage à zéro du signal de référence.

6. Système de mesure selon la revendication 5, **caractérisé en ce que** le multiplicateur de résolution spatiale est agencé pour générer, à partir des deux signaux analogiques SIN1 et COS1 en quadrature deux signaux numériques en quadrature, changeant d'état N fois par période magnétique.

7. Système de mesure selon la revendication 4, **caractérisé en ce que** l'unité de traitement du signal comporte:

- un calculateur pour déterminer un signal ARCTAN1 (SIN1/COS1) à partir des signaux SIN1 et COS1 ; et
- un opérateur pour déterminer le déphasage entre le signal SIN1 et le deuxième signal en fonction de la valeur du signal ARCTAN1 correspondant à un passage d'un seuil déterminé par le signal issu du deuxième capteur.

8. Système de mesure selon la revendication 3, **caractérisé en ce que** le premier signal issu du premier capteur est un signal analogique pseudo-sinusoïdal, le deuxième signal issu du deuxième capteur est un signal analogique pseudo-sinusoïdal et l'unité de traitement détermine le déphasage temporel entre le premier signal et le deuxième signal.

9. Système selon l'une quelconque des revendications 3 à 8, **caractérisé en ce que** le système comporte en outre une mémoire pour mémoriser les valeurs extrêmes du déphasage et un analyseur pour en déduire le jeu axial entre le dispositif de codage et le dispositif de détection.

10. Système de mesure selon l'une quelconque des revendications 3 à 9, **caractérisé en ce que** le premier capteur et le deuxième capteur sont dans un circuit intégré personnalisé ASIC commun.

11. Procédé de mesure du mouvement axial d'une pièce mobile en rotation autour d'un axe A par rapport à un référentiel fixe par un dispositif de codage selon une des revendications 1 ou 2, **caractérisé en ce qu'**il comporte au moins les étapes suivantes:

- engendrer un champ magnétique fixe par rapport à la pièce mobile à l'aide d'au moins une piste magnétique annulaire, l'une des composantes radiales du champ magnétique étant, à une distance radiale prédéterminée de l'axe A, dans un référentiel lié à la pièce mobile, une fonction F ($\Theta$, X) de la position angulaire $\Theta$ considérée sur la piste et de la position axiale X considérée sur la piste, telle que:

$$F(\Theta,X) = K.\Psi( P\,[\Theta + G(X)])$$

où P est un entier, G une fonction strictement croissante donnée de X, et Ψ une fonction périodique de période 2n,
- délivrer un premier signal S fonction des variations du champ magnétique engendré par la piste magnétique vues par un premier capteur fixe par rapport au référentiel fixe et distant,
- délivrer un signal référence REF fonction des variations du champ magnétique engendré par la piste magnétique vues par un deuxième capteur fixe par rapport au référentiel fixe et distant du premier capteur d'une distance axial D, et
- déterminer un déphasage instantané entre les variations du champ magnétique vu par le premier capteur et les variations du champ magnétique vu par le deuxième capteur en fonction du signal S et du signal REF ; et
- déterminer le déplacement axial de la piste magnétique par rapport au capteur en fonction du déphasage instantané.

12. Procédé de mesure du mouvement selon la revendication 11, **caractérisé en ce qu'**il comporte les étapes suivantes:

- délivrer deux signaux analogiques SIN1 et COS1 de même amplitude en quadrature en fonction des signaux représentatifs des variations du champ magnétique vues par un premier capteur fixes par rapport au référentiel et disposé en regard d'une piste annulaire,
- déterminer le signal S= arctan(SIN1/COS1) à partir des signaux SIN1 et COS1.

13. Procédé de mesure du mouvement selon la revendication 12, **caractérisé en ce qu'**il comporte les étapes suivantes:

- délivrer deux signaux analogiques SIN2 et COS2 de même amplitude en quadrature en fonction des signaux représentatifs des variations du champ magnétique vu par le deuxième capteur,
- déterminer le signal REF en fonction de SIN2 et/ou de COS2.

14. Procédé de mesure du mouvement selon la revendication 13, **caractérisé en ce qu'**il comporte les étapes suivantes:

- déterminer le signal REF=arctan(SIN2/COS2),
- déterminer le déphasage instantané comme étant la différence entre le signal REF et le signal S=arctan (SIN1/COS1).

15. Procédé de mesure du mouvement selon la revendication 12 à 14, **caractérisé en ce qu'**il comporte l'étape suivante: déterminer le déphasage en fonction de la valeur prise par le signal S=arctan (SIN1/COS1) lorsque le signal REF passe par une valeur seuil prédéterminée dans au moins un sens prédéterminé.

16. Procédé de mesure du mouvement selon la revendication 15, **caractérisé en ce que** le signal REF est proportionnel au signal SIN2 ou au signal COS2.

17. Procédé selon l'une quelconque des revendications 11 à 16, **caractérisé en ce que** la fonction G est une fonction de constante R, telle que:

$$G(x) = R\left(\frac{x - x_0}{x_0}\right)^2$$

**Patentansprüche**

1. Vorrichtung zur magnetischen Codierung zum Messen der Bewegung eines mobilen Stücks (1) in Rotation gemäß einer Achse A, umfassend einen magnetischen Ring (2) mit der Achse B, der ausgelegt ist, um mit dem mobilen Stück (1) konzentrisch zur Achse A fest verbunden zu sein, wobei der Ring (2) eine Umfangsspur umfasst, auf der eine Vielzahl von Paaren von Nord- und Südpolen (3, 4) gleichmäßig verteilt magnetisiert ist, wobei die Vorrichtung **dadurch gekennzeichnet ist, dass** die Pole der Umfangsspur die Form einer Spirale mit der Achse B und einem variablen Schraubenwinkel $\alpha$ gemäß einer Funktion $\alpha$ = f (x) aufweisen, wobei x die axiale Koordinate des Punkts bezeichnet, der auf der Achse B berücksichtigt wird.

2. Vorrichtung zur magnetischen Codierung nach Anspruch 1, **dadurch gekennzeichnet, dass** der Schraubenwinkel $\alpha$ gemäß einer Funktion $\alpha = f(x) = \arctan(2kx)$ variabel ist, wobei K eine Proportionalitätskonstante verschieden von Null bezeichnet.

3. System zur Messung der axialen Bewegung eines mobilen Stücks (1) in Rotation gemäß einer Achse A, umfassend:

   - Eine Vorrichtung zur Codierung nach einem der Ansprüche 1 oder 2;
   - eine Vorrichtung zum Nachweis des Magnetfelds, umfassend mindestens einen ersten (5) und einen zweiten feststehenden Magnetsensor (6), angeordnet in einem axialen Abstand d voneinander, der verschieden von Null ist, radial gegenüber und in einem Leseabstand von der Umfangsspur der Vorrichtung zur Codierung und empfindlich gegenüber den Variationen des Magnetfelds, das durch die Vorrichtung zur Codierung induziert wird; und
   - eine Einheit zu Verarbeitung des Signals (8), die angeordnet ist, um die Phasenverschiebung zwischen einem ersten Signal, das vom ersten Sensor stammt, und einem zweiten Signal, das vom zweiten Sensor stammt, zu bestimmen, um die axiale Verschiebung des mobilen Stücks (1) in Rotation zu bestimmen.

4. System zur Messung der Bewegung nach Anspruch 3, **dadurch gekennzeichnet, dass** der erste Sensor (5) Folgendes umfasst:

   - eine Vielzahl von empfindlichen Elementen, die sich auf einer gleichen Ebene senkrecht zur Achse A befinden, wobei die empfindlichen Elemente in mindestens zwei Untergruppen aufgeteilt sind, und
   - eine elektronische Schaltung, die angeordnet ist, um zwei analoge Signale SIN1 und COS1 mit der gleichen Quadraturamplitude je nach den Signalen zu liefern, die von diesen Untergruppen stammen.

5. System zur Messung nach Anspruch 4, **dadurch gekennzeichnet, dass** es Folgendes umfasst:

   - einen Multiplikator der räumlichen Auflösung, um auf der Grundlage der zwei analogen Quadratursignale SIN1 und COS1 mindestens ein digitales Signal zu erzeugen, das den Zustand N-mal pro magnetischer Periode ändert, wobei N eine ganze Zahl größer oder gleich 4 ist; und
   - einen Zähler, um die Phasenverschiebung zwischen dem Signal SIN1 und dem zweiten Signal durch Zählen der Anzahl von Zustandsänderungen des digitalen Signals zwischen einem Nulldurchgang des Signals SIN1 und dem Nulldurchgang des Referenzsignals zu bestimmen.

6. System zur Messung nach Anspruch 5, **dadurch gekennzeichnet, dass** der Multiplikator der räumlichen Auflösung angeordnet ist, um auf der Grundlage der zwei analogen Quadratursignale SIN1 und COS1 zwei digitale Quadratursignale zu erzeugen, die den Zustand N Mal pro magnetischer Periode ändern.

7. System zur Messung nach Anspruch 4, **dadurch gekennzeichnet, dass** die Einheit zur Bearbeitung des Signals Folgendes umfasst:

   - einen Rechner, um ein Signal ARCTAN1 (SIN1/COS 1) auf der Grundlage der Signale SIN1 und COS1 zu bestimmen; und
   - einen Operator, um die Phasenverschiebung zwischen dem Signal SIN1 und dem zweiten Signal je nach vom Wert des Signals ARCTAN1 zu bestimmen, das einem Durchgang einer Schwelle entspricht, die von dem Signal bestimmt wird, das aus dem zweiten Sensor stammt.

8. System zur Messung nach Anspruch 3, **dadurch gekennzeichnet, dass** das erste Signal, das vom ersten Sensor stammt, ein pseudo-sinusoidales analoges Signal ist, das zweite Signal, das vom zweiten Sensor stammt, ein pseudo-sinusoidales analoges Signal ist, und die die Einheit zur Verarbeitung die zeitliche Phasenverschiebung zwischen dem ersten Signal und dem zweiten Signal bestimmt.

9. System nach einem der Ansprüche 3 bis 8, **dadurch gekennzeichnet, dass** das System außerdem einen Speicher umfasst, um die extremen Werte der Phasenverschiebung zu speichern, und einen Analysator, um davon das axiale Spiel zwischen der Vorrichtung zur Codierung und der Vorrichtung zum Nachweis abzuleiten.

10. System zur Messung nach einem der Ansprüche 3 bis 9, **dadurch gekennzeichnet, dass** sich der erste Sensor und der zweite Sensor in einem gemeinsamen kundenspezifischen integrierten ASIC-Schaltkreis befinden.

11. Verfahren zur Messung der axialen Bewegung eines mobilen Stücks in Rotation gemäß einer Achse A mit Bezug auf eine feststehende Referenz durch eine Vorrichtung zur Codierung nach einem der Ansprüche 1 oder 2, **dadurch gekennzeichnet, dass** es mindestens die folgenden Schritte umfasst:

- Generieren eines feststehenden Magnetfelds mit Bezug auf das mobile Stück mit Hilfe von mindestens einer ringförmigen Magnetspur, wobei eine der radialen Komponenten des Magnetfelds in einen vorbestimmten radialen Abstand von der Achse A in einem an das mobile Stück gebundenen Bezugssystem eine Funktion F (θ, X) der Winkelposition θ, die auf der Spur berücksichtigt wird, und der axialen Position X, die auf der Spur berücksichtigt wird, ist, wie:

$$F(\Theta),\ X) = K.\ \Psi(\ P\ [\Theta + G(X)])$$

wobei P eine ganze Zahl ist, G eine gegebene streng zunehmende Funktion von X ist und Ψ und eine periodische Funktion der Periode 2n ist,
- Liefern eines ersten Signals S je nach den Variationen des Magnetfelds, das durch die Magnetspur erzeugt wird, gesehen von einem ersten Sensor, der mit Bezug auf das feststehende und entfernte Bezugssystem feststehend ist,
- Liefern eines Referenzsignals REF je nach den Variationen des Magnetfelds, das durch die Magnetspur erzeugt wird, gesehen von einem zweiten Sensor, der mit Bezug auf das feststehende und entfernte Bezugssystem feststehend ist, und entfernt vom ersten Sensor um einen axialen Abstand D, und
- Bestimmen einer unmittelbaren Phasenverschiebung zwischen den Variationen des Magnetfelds, gesehen vom ersten Sensor, und den Variationen des Magnetfelds, gesehen vom zweiten Sensor je nach dem Signal S und dem Signal REF; und
- Bestimmen der axialen Verschiebung der Magnetspur mit Bezug auf den Sensor je nach der unmittelbaren Phasenverschiebung.

12. Verfahren zur Messung der Bewegung nach Anspruch 11, **dadurch gekennzeichnet, dass** es die folgenden Schritte umfasst:

- Liefern von zwei analogen Signalen SIN1 und COS1 mit der gleichen Quadraturamplitude je nach den Signalen, die die Variationen des Magnetfelds darstellen, gesehen von einem ersten feststehenden Sensor mit Bezug auf das Bezugssystem und bereitgestellt gegenüber einer ringförmigen Bahn,
- Bestimmen des Signals S = arctan (SIN1/COS1) auf der Grundlage der Signale SIN1 und COS1.

13. Verfahren zur Messung der Bewegung nach Anspruch 12, **dadurch gekennzeichnet, dass** es die folgenden Schritte umfasst:

- Liefern von zwei analogen Signalen SIN2 und COS2 mit der gleichen Quadraturamplitude je nach den Signalen, die die Variationen des Magnetfelds darstellen, gesehen vom zweiten Sensor,
- Bestimmen des Signals REF je nach SIN2 und/oder COS2.

14. Verfahren zur Messung der Bewegung nach Anspruch 13, **dadurch gekennzeichnet, dass** es die folgenden Schritte umfasst:

- Bestimmen des Signals REF = arctan (SIN2/COS2)
- Bestimmen der unmittelbaren Phasenverschiebung als der Differenz zwischen dem Signal REF und dem Signal S = arctan (SIN1/COS1).

15. Verfahren zur Messung der Bewegung nach Anspruch 12 bis 14, **dadurch gekennzeichnet, dass** es die folgenden Schritte umfasst: Bestimmen der Phasenverschiebung je nach dem Wert, der vom Signal S = arctan (SIN1/COS1) angenommen wird, wenn das Signal REF einen vorgegebenen Schwellenwert in mindestens einer vorbestimmten Richtung durchläuft.

16. Verfahren zur Messung der Bewegung nach Anspruch 15, **dadurch gekennzeichnet, dass** das Signal REF proportional zum Signal SIN2 oder zum Signal COS2 ist.

**17.** Verfahren nach einem der Ansprüche 11 bis 16, **dadurch gekennzeichnet, dass** die Funktion G eine Funktion der Konstante R ist, wie:

$$G(x) = R\left(\frac{x - x_0}{x_0}\right)^2$$

## Claims

**1.** Magnetic encoding device for measuring the movement of a part (1) movable in rotation along an axis A, comprising a magnetic ring (2) of axis B, intended to be made integral with said mobile part (1) concentrically to said axis A, said ring (2) comprising a peripheral track whereon are magnetised a plurality of pairs of north and south poles (3, 4), equally distant, the device being **characterised in that** the poles of said peripheral track have a helix shape of axis B and of helix angle $\alpha$ variable according to a function $\alpha = f(x)$ where x designates the axial coordinate of the point considered on the axis B.

**2.** Magnetic encoding device according to claim 1, **characterised in that** the helix angle $\alpha$ is variable according to a function $\alpha = f(x) = \arctan(2Kx)$ where K designates a non-zero proportionality constant.

**3.** System for measuring the axial movement of a part (1) mobile in rotation along an axis A, comprising:

- a device for encoding according to one of claims 1 or 2;
- a device for detecting a magnetic field comprising at least one fixed first (5) and second fixed magnetic sensors (6), arranged at a non-zero axial distance d from one another, radially opposite and a reading distance from the peripheral track of the encoding device and sensitive to variations in the magnetic field induced by the encoding device; and
- a unit for processing the signal (8) arranged in order to determine the phase shift between a first signal coming from the first sensor and a second signal coming from the second sensor in order to determine the axial displacement of said mobile part (1) in rotation.

**4.** System for measuring movement according to claim 3, **characterised in that** the first sensor (5) comprises

- a plurality of sensitive elements located in the same plane perpendicular to the axis A, with the sensitive elements being divided into at least two subsets and
- an electronic circuit arranged to deliver two analogue signals SIN1 and COS1 of likewise amplitude in quadrature according to the signals coming from these subsets.

**5.** System for measuring according to claim 4, **characterised in that** it comprises:

- a spatial resolution multiplier in order to generate, using the two analogue signals SIN1 and COS1 in quadrature, at least one digital signal that changes state N times per magnetic period, N being an integer greater than or equal to 4; and
- a counter for determining the phase shift between the signal SIN1 and the second signal by counting the number of changes in state of the digital signal between a passing at zero of the signal SIN1 and the passing at zero of the reference signal.

**6.** System for measuring according to claim 5, **characterised in that** the spatial resolution multiplier is arranged to generate, using the two analogue signals SIN1 and COS1 in quadrature two digital signals in quadrature, changing state N times per magnetic period.

**7.** System for measuring according to claim 4, **characterised in that** the unit for processing the signal comprises:

- a calculator for determining a signal ARCTAN1 (SIN1/COS1) using signals SIN1 and COS1; and
- an operator for determining the phase shift between the signal SIN1 and the second signal according to the value of the signal ARCTAN1 corresponding to a passing from a threshold determined by the signal coming from the second sensor.

8.  System for measuring according to claim 3, **characterised in that** the first signal coming from the first sensor is a pseudo-sinusoidal analogue signal, the second signal coming from the second sensor is a pseudo-sinusoidal analogue signal and the processing unit determines the time phase shift between the first signal and the second signal.

9.  System according to any of claims 3 to 8, **characterised in that** the system further comprises a memory for memorising the extreme values of the phase shift and an analyser for deducing therefrom the axial gap between the encoding device and the detection device.

10. System for measuring according to any of claims 3 to 9, **characterised in that** the first sensor and the second sensor are together in an ASIC personalised integrated circuit.

11. Method for measuring the axial movement of a part movable in rotation about an axis A with respect to a fixed referential by an encoding device according to one of claims 1 or 2, **characterised in that** it comprises at least the following steps:

    - generating a fixed magnetic field with respect to the mobile part using at least one annular magnetic track, with one of the radial components of the magnetic field being, at a predetermined radial distance from axis A, in a referential linked to the mobile part, a function F ($\theta$, X) of the angular position $\theta$ considered on the track and of the axial position X considered on the track, such that:

$$F(\Theta, X) = K.\Psi(P[\Theta + G(X)])$$

    where P is an integer, G a strictly increasing data function of X, and $\Psi$ a periodical function with a period of 2n,
    - delivering a first signal S according to the variations in the magnetic field generated by the magnetic track seen by a first sensor fixed in relation to the fixed referential and distant,
    - delivering a reference signal REF according to the variations in the magnetic field generated by the magnetic track seen by a second sensor fixed in relation to a fixed referential and distant from the first sensor by an axial distance D, and
    - determining an instant phase shift between the variations in the magnetic field seen by the first sensor and the variations in the magnetic field seen by the second sensor according to the signal S and the signal REF; and
    - determining the axial movement of the magnetic track with respect to the sensor according to the instant phase shift.

12. Method for measuring movement according to claim 11, **characterised in that** it comprises the following steps:

    - delivering two analogue signals SIN1 and COS1 of the same amplitude in quadrature according to the representative signals of the variations in the magnetic field seen by a first sensor fixed in relation to the referential and arranged opposite an annular track,
    - determining the signal S= arctan(SIN1/COS1) using the signals SIN1 and COS1.

13. Method for measuring movement according to claim 12, **characterised in that** it comprises the following steps:

    - delivering two analogue signals SIN2 and COS2 of the same amplitude in quadrature according to the representative signals of the variations in the magnetic field seen by the second sensor,
    - determining the signal REF according to SIN2 and/or COS2.

14. Method for measuring movement according to claim 13, **characterised in that** it comprises the following steps:

    - determining the signal REF=arctan(SIN2/COS2),
    - determining the instant phase shift as being the difference between the signal REF and the signal S=arctan (SIN1/COS1).

15. Method for measuring movement according to claim 12 to 14, **characterised in that** it comprises the following step:

determining the phase shift according to the value taken by the signal S=arctan (SIN1/COS1) when the signal REF passes by a predetermined threshold value in at least one predetermined direction.

16. Method for measuring movement according to claim 15, **characterised in that** the signal REF is proportional to the signal SIN2 or to the signal COS2.

17. Method according to any of claims 11 to 16, **characterised in that** the function G is a function of constant R, such that:

$$G(x) = R\left(\frac{x - x_0}{x_0}\right)^2$$

FIG.1a

FIG.1b

$Y = X^2$

$\Delta y$

$\alpha$

$x$

$x+d$

X

FIG.1c

1  5  4

N  S  N  S  N  S  N

6

$L_p$

x

y

O

Sin

REF

360°

FIG.2

FIG.3

FIG.4

Voie A

Voie B

Exploitation
de toutes
les transitions

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1875422 A
- JP 2006201157 B
- FR 2771864
- FR 2790827
- EP 0929795 A